# EUROPEAN PATENT SPECIFICATION

(11) **EP 2 219 475 B1**
(45) Date of publication and mention of the grant of the patent: **23.11.2016**
(21) Application number: 08863880.4
(22) Date of filing: 19.12.2008
(51) Int. Cl.: A23L 27/10, A23L 19/00, A23L 27/60, A23L 2/70

(54) **TOMATO PRODUCT AND PROCESS TO PREPARE THE SAME**
TOMATENPRODUKT UND HERSTELLUNGSVERFAHREN DAFÜR
PRODUIT DE TOMATE ET SON PROCÉDÉ DE FABRICATION

(30) Priority: 21.12.2007 EP 07124003; 21.12.2007 EP 07124025
(43) Date of publication of application: 25.08.2010
(73) Proprietor: Unilever N.V., 3013 AL Rotterdam (NL); Unilever PLC, A Company Registered in England and Wales under Company no. 41424, London EC4Y 0DY Greater London (GB)
(72) Inventor: DUBBELMAN, Sander, NL-3133 AT Vlaardingen (NL); MAVROUDIS, Nikolaos Sr.Lecturer and Programme Leader in Food Service, Ellison Place Newcastle upon Tyne,NE1 8ST (GB); OLIEHOEK, Leandro, SP CEP 13270-00 Valinhos (BR); RAVESTEIN, Peter, 3111 PN Schiedam (NL)
(74) Representative: Tjon, Hon Kong Guno
(86) International application number: PCT/EP2008/068064
(87) International publication number: WO 2009/080768

(56) References cited:
- WO-A-95/16363
- WO-A-97/48287
- WO-A-99/60868
- WO-A-03/024243
- FR-A- 2 041 431
- NIR Z ET AL: "LYCOPENE FROM TOMATOES. ÖA NEW COMMERCIAL NATURAL CAROTENOID" INTERNATIONAL FOOD INGREDIENTS, XX, XX, no. 6, 1 January 1993 (1993-01-01), pages 45-51, XP000564224

## Description

The present invention is in the field of tomato products more specifically, tomato fractions which can be used as a natural sweetener and a process to prepare the same. Tomato products like tomato paste, tomato ketchup, tomato sauces for pasta have been known in the art. More recently, tomato products have been described comprising high amounts of lycopene crystals (WO 96/13178). US 2006/0088546 describes tomato products having Brix similar to the Brix of raw tomatoes but with lycopene levels of 600 to 1200% of a raw tomato.

Traditionally, tomato products are renowned for their savoury taste and use in savoury applications such as pasta sauces and (meat) casseroles. Other tomato products described in the literature have been used to add a savoury note. One such tomato product has been described in EP 1 082 027, which relates to the use of clear tomato concentrate as a savoury taste enhancer. The clear tomato concentrate of EP 1 082 027 is produced by processing tomatoes so as to obtain two fractions, the serum and the pulp, where after the serum is further concentrated to a value of e.g. 80 Brix and then hydrolyzed or vice versa. Both acid and enzymatic hydrolysis are suggested in EP 1 082 027. It would be desirable to develop alternative tomato products that have a wider application.

FR 2 041 437 relates to improving processes to produce vegetable or fruit juices. The problem to be solved is that due to weather conditions or agricultural methods tomatoes used for producing tomato juice have too high amounts of acid.

WO 95/16363 relates to a process for the exploitation of tomatoes and the manufacture of tomato products, comprises the steps of pretreating the tomatoes by washing, crushing, and removing waste materials; separating serum from the pulp; divining the pulp; extracting one fraction of the pulp, to produce extracted tomato oleoresins; using the extracted pulp as a raw material for food products; removing another part of the serum obtained in step (b), to be used as food product or as a raw material for food products; concentrating the remaining serum to yield a concentrate of soluble tomato solids; and removing parts of tomato soluble solids to be used in the preparation of food product,

Surprisingly, applicants have found a tomato fraction which can be used to sweeten food products without adding a savoury note to the food product or off setting the sweet taste. The tomato fraction according to this aspect of the invention is substantially free from sucrose and has a relatively high amount of tomato derived glucose and fructose while it has very low amounts of other tomato derived compounds that could off set the sweet taste.

Tomato ketchup is a popular tomato product. It contains tomato paste, flavouring and above all a relatively high amount of sucrose. Sucrose is typically prepared from sucrose containing sources like sugar beet, sugar cane and intermediate products like molasses. However, sucrose is becoming an undesirable food additive. Artificial sweeteners like aspartame, acesulfame K, neohesperidine DC, aspartame, neotame, saccharin, sucralose, alitame, thaumatine, cyclamate and glycyrrhizin, can be used although a growing number of consumers are avoiding such artificial additives. The inventive tomato fraction may be advantageously used by food manufacturers seeking natural alternatives to sucrose while still being able to declare that only natural ingredients have been used to prepare their food product. For example, the present invention now provides an alternative to prepare a tomato ketchup with a sweet taste without the need to add sucrose and/or artificial sweeteners using a source substantially free from sucrose.

In addition, the invention encompasses a process to prepare the inventive tomato fractions described above and tomato fractions obtainable by such process. Preferably such process should be cost-effective and robust when used on a large scale. Preferably, the tomato fraction is substantially free from lycopene. Thus according to one embodiment of the invention a tomato fraction substantially free from lycopene is provided, said fraction comprising - a w/w ratio of tomato sugars to citric acid (S/C) higher than 10:1, - a w/w ratio of tomato sugars to potassium (S/K+) higher than 15:1 whereby tomato sugars is the combined amount of glucose and fructose.

### Detailed description of the invention

The term tomato sugar(s) will be used to describe the combined amount of tomato glucose and fructose. Preferably these are measured as described in the examples. The term "tomato fraction" will be used to describe a fraction obtained after a fractionation step using a tomato extract as a feed. The term "tomato extract" will be used to denote a composition extracted from tomatoes such as tomato serum. The term "primary tomato fraction" will be used to describe a tomato fraction obtained after one fractionation step. The term "secondary tomato fraction" will be used to describe a tomato fraction obtained after fractionating a primary tomato fraction. The term "tomato fraction" will be used to refer to a primary or a secondary tomato fraction or both. When the term "first" and "second" is used to distinguish e.g. a first primary fraction from a second primary fraction, these terms are meant to distinguish these primary fractions from each other and not meant to describe the order of elution of these fractions. The description of at least one first and at least one second fraction includes the possibility of at least one third fraction. Although, the tomato fraction will not have a characteristic tomato smell it usually will have trace amounts of some aroma and phenolic compounds that survive the process to obtain said tomato fraction such as the fractionation step. A tomato fraction will usually have trace amounts of GABA, proline and potassium. Preferably a tomato fraction will have at least 0.05 wt% of the combined amount of GABA and proline and preferably at least 0.1 wt% of potassium by dry weight of the tomato fraction. It is understood that when a combined amount is described it does not mean that all components need to be present. For example, in the case of a "combined amount of GABA and proline" e.g. in some cases proline may be absent.

The term "Brix value" which is considered to be synonymous to the term degrees Brix (symbol °Bx) is a measurement of the amount of dry matter. It is a measure of the percent total soluble solids in a given weight of plant juice, which includes the summation of sucrose glucose, fructose, vitamins, amino acids, protein, hormones and any other soluble solids. It is often expressed as the percentage of sucrose. It is measured with a saccharimeter that measures specific gravity of a liquid or more easily with a refractometer or a Brix hydrometer.

The term "comprising" whenever used in this document is intended to indicate the presence of stated features, integers, steps, components, but not to preclude the presence or addition of one or more other features, integers, steps, components or groups thereof.

Tomato products are renowned for their savoury taste and use in savoury applications such as pasta sauces and casseroles. Surprisingly, applicants have found a tomato fraction which can be used to sweeten food products like tomato ketchup but also non-tomato food products without adding a savoury note or offsetting the sweet taste. The tomato fraction according to one aspect of the invention is relatively high in tomato sugars while having very low amounts of other tomato derived compounds that could off set the sweet taste of the tomato fraction. Without wishing to be bound by any theory, it is believed that the inventive tomato fractions are characterized by relatively low levels of certain tomato compounds while having relatively high levels of tomato sugars. This can be expressed as certain w/w ratios of tomato sugars to these undesirable tomato compounds. Applicants believe that a tomato fraction can be advantageously used as a universal sweetener when said tomato fraction has one or more of the following w/w ratios:
- a w/w ratio of tomato sugars to citric acid (S/C) higher than 10:1, preferably higher than 15:1, preferably higher than 50:1, preferably higher than 100:1; and preferably at most 1:0, preferably 1:0, whereby tomato sugars is the combined amount of glucose and fructose;
- w/w ratio of tomato sugars to the combined amount of (aspartic acid, gamma amino butyric acid and proline) (S/(A-Ga-P)) higher than 20:1, preferably higher than 100:1, preferably higher than 120:1, preferably higher than 150 : 1, and preferably at most 1:0, most preferably 1:0;
- a w/w ratio of tomato sugars to potassium (S/K+) higher than 15:1, preferably higher than 50:1, preferably higher than 100:1, preferably higher than 200:1, and preferably at most 1:0, most preferably 1:0. Preferably the tomato fraction is according to 2 or 3 of these w/w ratios.

While in most cases there will be some measurable amount of one or more of these undesirable tomato compounds, depending on the process used the level of these undesirable tomato compounds may be very low such that these w/w ratios are correspondingly high. In the extreme case that no measurable amount of such an undesirable tomato compound is present the tomato fraction has a w/w ratio 1:0. Formulated in alternative terms such tomato fraction is characterized by the absence of measurable amounts of the respective undesirable tomato compounds, while having high levels of tomato sugars. The three amino acids are preferably measured using the method described in the examples. On solids base the level of tomato sugars in the inventive tomato fraction will be preferably higher than 70 wt%, more preferably higher than 80 wt%, even more preferably higher than 85 wt%, but preferably less than 99 wt%, more preferably less than 95 wt%. Thus, according yet another aspect of the invention a tomato fraction is provided to sweeten food products whereby the tomato fraction comprises tomato sugars in an amount higher than 70 wt%, more preferably higher than 80 wt%, even more preferably higher than 85 wt%, but preferably less than 99 wt%, more preferably less than 95 wt% by dry weight of the tomato fraction.

The tomato fraction according to the invention is substantially free from lycopene. A tomato fraction substantially free from lycopene may be advantageously used in various food applications unlike tomato fractions with a characteristic tomato colour.

The tomato fraction according to the invention may be advantageously used in a wide spectrum of food products including non-savoury food products such as tomato ketchup. The amount of the inventive tomato fraction to be used in a food product to be sweetened is the sufficient amount to obtain the desired sweetness. According to another aspect of the invention a sweetened food product is provided comprising a sufficient amount of an inventive tomato fraction, preferably a sufficient amount of the inventive tomato fraction is at least 1 wt%, preferably at least 5 wt%, more preferably at least 10 wt% and preferably at most 99 wt%, more preferably at most 90 wt%, most preferably at most 70 wt% based on the dry weight of the tomato fraction and the food product. Although it is preferred to use the inventive tomato fraction instead of adding sucrose or artificial sweeteners, in some cases it may be combined. Especially preferred food products include tomato ketchup, sauces (e.g. tomato, pasta sauce), soups, (salad) dressings, meals, side dishes, cooking aids, beverages, ice cream and concentrates of fruit and vegetable(s). Cooking aids include bouillon products in any format such a granular, pasty, jelly, compressed (e.g. in cubes with or without a semi solid core). Fruit and vegetable concentrates include those concentrates based on vegetables and/or fruits.

According a further aspect of the invention a method is provided for sweetening a food product by mixing the food product to be sweetened with a tomato fraction according to the invention.

### Process

When trying to develop a process to prepare the inventive tomato fractions, applicants found that existing processes did produce the desired w/w ratios, but they were not cost-effective or not robust, i.e. fractionation of different undesirable tomato compounds was not reproducible enough for economic production. Therefore it was a further object of the invention to provide a process to solve these problems. Surprisingly, applicants have found that this object is met by the following aspect of the invention which provides a method of producing a tomato fraction as described supra comprising the steps of
a) providing a tomato serum, preferably substantially free from sucrose;
b) separating the serum into two or more portions: at least one first portion and at least one second portion whereby the at least one first portion is lower in lycopene than the at least one second portion;
c) concentrating the at least one first portion low in lyccpene, preferably to a Brix level of at least 10, preferably at least 12, more preferably at least 20, more preferably at least 30 and preferably at most 80, more preferably at most 60, even more preferably at most 50 degrees Brix;
d) fractionating the at least one first portion low in lycopene into at least one first primary fraction and at least one second primary fraction whereby the w/w ratio of tomato sugars to citric acid (S/C) of the at least one first primary fraction is lower than the at least one second primary fraction, preferably the at least one first primary fraction has a w/w ratio of tomato sugars to citric acid (S/C) of at most 10, and preferably at least 0:1, preferably 0:1, and the at least one second primary fraction having a w/w ratio of tomato sugars to citric acid (S/C) higher than 10 and preferably at most 1:0, preferably 1:0;
e) optionally, subjecting a primary faction to a second fractionation step to prepare at least one first secondary fraction having a w/w ratio of tomato sugars to the combined amount of aspartic acid, GABA and proline (S/A-Ga-P) of at most 20:1, preferably at most 15:1 more preferably at most 7:1, and preferably at least 0:1, preferably 0:1 and at least one second secondary fraction having a w/w ratio of (S/A-Ga-P) higher than 20:1, and preferably at most 1:0, preferably 1:0;
f) optionally, combining the at least one second primary fraction and the at least one second secondary fraction to form a tomato fraction having a w/w ratio of tomato sugars to citric acid of higher than 10, and preferably at most 1:0, preferably 1:0.

Prior to providing the serum, tomatoes are typically collected, washed, sorted and selected in accordance with the usual practice in tomato processing. These steps are not an essential aspect of the invention and any feasible type of operation may be applied with regard to pretreatment without departing from the scope of the invention.

Typically, the step of providing a tomato serum comprises a stage of comminuting and/or macerating tomatoes, which in accordance with the invention, is meant to encompass any type of process that can be employed to disintegrate or break the tomatoes, typically, in order to obtain a pumpable mass. Typically the comminuting or macerating is continued until the particle size in the pumpable mass is reduced to certain predetermined dimensions. In order to achieve this, any type of operation and/or apparatus known to or conceivable for the skilled person may be used in accordance with the invention. According to a preferred embodiment a chopper pump is employed, wherein the tomatoes are pressed through square holes, typically 1-2 cm in diameter. In a particularly preferred embodiment, the step of providing the serum comprises the stage of applying heat prior to, during or after the comminuting and or macerating of the tomatoes. If the amount of heat applied is such that the tomatoes reach a temperature of above 80 degrees C, the process is generally referred to as hot break. Hot break has the advantage that enzymes, e.g. pectin-degrading enzymes, are inactivated quickly.

After having obtained a pumpable mass, in a separation step said pumpable mass is separated into serum - an aqueous liquid comprising soluble tomato solids - and pulp, a (wet) solid mass containing mainly insoluble tomato components such as the skin and seeds. In accordance with a preferred embodiment of the invention seeds and skin may be removed from the pumpable mass, typically by sieving using perforated screens or the like in accordance with common tomato processing, prior to said separation. Separation of the pumpable mass into serum and pulp can be effected by any means known in the art, in particular using a decanter or a centrifugal separator. In a particularly preferred embodiment of the invention a centrifugal separator is employed, such as a Westfalia CA-365-010 at a revolution speed of 4000 rpm and/or an Alfa Laval Centrifuge. In the context of the invention the pulp obtained is considered to constitute a waste material, but it may be used in accordance with conventional tomato processing, for a variety of purposes known by the skilled person. Performing the separation in two or even more steps may be preferred. However, as will be clear to the skilled person, separation in one single step, though less convenient, may be found just as suitable and may be applied without departing from the scope of the invention.

Optionally, the obtained serum may be clarified by micro filtration, so as to assure that said serum is free of any undissolved solids remaining, which may typically present problems during further process steps. Typically the additional micro filtration step comprises forcing the serum through a microfilter having a pore size within the range of 0.2-100 micron, preferably within the range of 2-50 micron, most preferably within the range of 3-30 micron (endpoints included in the range).

In a further step, the obtained serum, if desired after the micro-filtration step described supra, is separated into two or more portions: at least one first portion and at least one second portion whereby the at least one first portion is lower in lycopene than the at least one second portion.

The serum used as starting material for this separation step is preferably undiluted or even more preferably concentrated. Concentration may be carried out until a specific predefined Brix level has been reached. For example, the solution may be concentrated by removing at least part of the water content e.g. under reduced pressure and/or increased temperature, such as to increase the rate of water evaporation. As will be understood by the skilled person, applying reduced pressure can suitably reduce thermal damage to the product as lower temperatures can be used, thus improving the quality of the obtained product. Preferably the concentration is performed using a falling film evaporator or plate evaporator, although entirely different systems are available and can be used without departing from the scope of the invention. Surprisingly, applicants have found that concentrating the solution used as the feed for the separation step or a fractionation step was especially advantageous by rendering the process more robust and cost effective. Thus, the feed for the separation process or fractionation process is preferably concentrated until having a Brix value of at least 10, preferably at least 12, more preferably at least 20, more preferably at least 30 and preferably at most 80, more preferably at most 60, even more preferably at most 50.

The tomato serum used is preferably substantially free from sucrose. For this purpose the term substantially free from sucrose is meant to describe a level of less than 5 wt%, more preferably less than 3 wt%, most preferably less than 2 wt% of sucrose by weight of the tomato serum based on dry matter.

The separation step preferably comprises ultra-filtrating the serum through a membrane with a molecular weight cut off of 250 kDa, more preferably 200 kDa, even more preferably 100 kDa, most preferably 50 kDa. For the ultra filtration any suitable membrane may be used known to the skilled person in the art for this purpose. Typically, ultra filtration membranes are meant to describe membranes which can remove particles of 0.001 - 0.02 micron. A suitable membrane is an Alfa-Laval polysulphone membrane with 100kDa molecular weight cut-off (GR40PP). If ultra filtration is used, the at least one second portion is preferably the retentate of the ultra filtration step having a level of lycopene higher than the at least one first portion, the latter being the permeate. The at least one first portion of that separation step, e.g. the ultra filtration permeate is preferably substantially free from lycopene. In fact, all tomato fractions according to the invention are preferably substantially free from lycopene. Substantially free from lycopene in this respect means that the lycopene level is below 3 ppm, more preferably below 1 ppm, most preferably it is below 0.5 ppm, preferably at least 0 ppm, preferably 0 ppm. Ppm measurements are usually based on the wet weight thereof as it is measured in permeate which needs to be liquid for the next step of the process, but in some cases dry weight may be used.

In a preferred subsequent step, the at least one first portion obtained after the first separation step may then be concentrated as described above.

The at least one first portion obtained from the separation step, in case of ultra filtration the ultra filtration permeate, preferably after having been concentrated to e.g. 40 Brix, is then used as a feed for a chromatographic fractionation. This fractionation step is preferably carried out by passing the feed through the chromatographic separation medium and eluting the feed components from the medium with a suitable eluent, thereby achieving fractionation of the feed into at least one first primary fraction and at least one second primary fraction.

Any suitable method may be used for the fractionation step. Fractionation is preferably achieved by using ion exclusion chromatography whereby the chromatographic separation medium is an ion exclusion resin. Another fractionation technique includes electrodialysis.

Applicants have found that the fractionation is more robust and cost-effective when it is carried out at elevated temperatures. Fractionation, e.g. when ion exclusion chromatography is used, is preferably carried out at a temperature of at least 40 degrees C, preferably at least 50 degrees C, more preferably at least 60 degrees C, preferably at most 95 degrees C, more preferably at most 85 degrees C, most preferably at most 75 degrees C.

The at least one first portion obtained from the separation step used as a feed for the first fractionation step preferably comprises of more than 5 g/L of potassium, preferably more than 10 g/L of potassium, more preferably more than 15 g/L of potassium by weight of said first portion.

Any appropriate solution may be used as eluent but demineralised water is preferred. More preferred is water purified by for example reverse osmosis (e.g. MilliQ). Another preferred eluent includes demineralised water comprising at most 0.1 wt%, preferably 0.05 wt% or more preferably at most 0.01 wt% of particle free tomato serum. Particle free tomato serum is meant to describe tomato serum comprising less than 5 ppm of particles of at least 0.2 microns, more preferably less than 3 ppm of particles of at least 0.2 microns, even more preferably less than 1 ppm of particles of at least 0.2 microns, most preferably no particles of at least 0.2 microns. Particle free tomato serum may be prepared using any suitable means known to the skilled person such as micro filtration or ultra filtration.

Suitable ion exclusion resins include DIAION™ UBK-530, UBK-535, UBK-550, and UBK-555 (each of which is produced by Mitsubishi Chemical Corporation). Especially preferred is UBK-530, a strong acid cation exchange resin containing, as a base material, polystyrene-divinyl benzene gel (produced by MITSUBISHI CHEMICAL CORP.; K+-type; average particle size: 200 to 240 µm; exchange capacity: 1.6 meq/ml). The eluting solution is preferably demineralised water.

Another fractionation technique, especially for the first fractionation step, includes electrodialysis. Electrodialysis is an electro-membrane process where transport of ions takes place through ion exchange membranes from one solution to another under the influence of an electric potential. Ion-exchange membranes resemble highly swollen ion-exchange resins in a sheet format. In conventional electrodialysis two different kinds on ion-exchange membranes are used:
- Cation exchange membranes which contain negatively charged groups fixed to the polymer matrix
- Anion exchange membrane which contain positively charged groups fixed to the polymer matrix

Mobile ions in solution that have the same charge as the fixed groups in the membrane are referred as co-ions and mobile ions that have the opposite charge as the fixed groups in the membrane are referred as counter ions. In electrodialysis it is assumed that the total current through the membrane is transported by ions only. Under the influence of an electric field the mobile ions in solution travel to the respective electrodes. Co-ions are rejected by membranes and counter ions pass through the membranes. Generally guided by the teaching of this application, a skilled person will be able to choose the conditions and membranes for electro dialysis to obtain the inventive tomato fraction. More specifically, the membranes should preferably be permeable for negatively charged organic molecules having the molecular weight of 250, more preferably 225, more preferably 200. Most preferably, the membrane should be permeable for citric acid (192).

The primary fractions resulting from a first fractionation step may vary in composition depending on when they are collected. Preferably, first fractionation step comprises fractionating the concentrated at least one first portion relatively low in lycopene into at least one first primary fraction and at least one second primary fraction whereby one or more of the following w/w ratio's of the at least one second primary fraction is higher than the at least one first primary fraction, said w/w ratio being one or more of the three weight ratio's mentioned above: S/C, S/(A-Ga-P), S/K+. Preferably, at least one first primary fraction is collected such that the w/w ratio of tomato sugars to citric acid is at most 10. Such a first primary fraction is relatively low in sugar and relatively high is citric acid. As it will be clear to the skilled person in this art it will be possible to minimize the amount of tomato sugars in this fraction to substantially zero such that the said w/w ratio of tomato sugars to citric acid approaches zero or becomes zero.

Usually at least one second primary fraction is collected such that the said fraction has one or more of the following w/w ratios:
- a w/w ratio of tomato sugars to citric acid (S/C) higher than 10:1, preferably higher than 15:1, preferably higher than 50:1, preferably higher than 100:1; more preferably 1:0, whereby tomato sugars is the combined amount of glucose and fructose;
- w/w ratio of tomato sugars to the combined amount of (aspartic acid, gamma amino butyric acid and proline) (S/(A-Ga-P)) higher than 20:1, preferably higher than 100:1, preferably higher than 120:1, preferably higher than 150:1, most preferably 1:0.;
- a w/w ratio of tomato sugars to potassium (S/K+) higher than 15 : 1, preferably higher than 50 : 1, preferably higher than 100 : 1, preferably higher than 200 : 1, most preferably 1: 0. Preferably the at least one second primary fraction is according to 2 or 3 of these w/w ratios.

For certain applications the level of undesirable tomato compounds and the respective w/w ratio may still be too high in a primary tomato fraction. For example, a w/w ratio may be outside the lowest range given above. Or in some cases even when a w/w ratio is higher than the lowest range described above, it may be desired to increase the w/w ratio even more. In such cases - inter alia - it may be desirable to decrease the amount of undesirable tomato compounds in a primary fraction even more by fractionating the primary fraction in a second fractionation step. Thus an optional step comprises subjecting a primary fraction to a second fractionation step to prepare at least one first secondary fraction and at least one second secondary fraction whereby one or more of the following w/w ratio's of the at least one second secondary fraction is higher than the at least one first secondary fraction, said w/w ratio being one or more of the three weight ratio's mentioned above: S/C, S/(A-Ga-P), S/K+.
Preferably the at least one first secondary fraction has a w/w ratio of tomato sugars to the combined amount of aspartic acid, GABA and proline (S/A-Ga-P) of at most 20:1, preferably at most 15:1 more preferably at most 7:1 and/or a w/w ratio of sugars to potassium (S/K+) of at most 15:1. Preferably the at least one second secondary fraction has a w/w ratio of (S/A-Ga-P) of higher than 20:1, preferably higher than 100:1, preferably higher than 120:1, preferably higher than 150:1, most preferably 1:0. and/or a w/w ratio of tomato sugars to potassium (S/K+) higher than 15:1, preferably higher than 50:1, preferably higher than 100:1, preferably higher than 200:1, more preferably at most 1:0, most preferably 1:0.

The primary fraction used as a feed for the second fractionation step is preferably concentrated as described above. The primary fraction used as a feed for the second fractionation step may be the at least one first or the at least one second primary fraction. The feed for the second fractionation step is preferably at least one second primary fraction as described before.

For the second fractionation step, ion exclusion chromatography may be used as detailed above.

To increase the yield per kg of tomatoes used, the primary and secondary fractions high in tomato sugars may be combined to from a single tomato fraction high in tomato sugars. Preferably the second primary fraction and the second secondary fraction are combined to from a single tomato fraction high in tomato sugars. Either of these fractions, primary, secondary or the combination thereof preferably has a w/w ratio of tomato sugars to citric acid, tomato sugars to potassium, tomato sugars to the combined amount of (Aspartic acid, GABA, Proline) (S/(A-Ga-P) as described above for the at least one second primary fraction.

Any of these tomato fractions may be concentrated as desired or even dehydrated such that a dry powder is obtained.

Different embodiments of the invention may be carried out in using preferred or more preferred conditions (e.g. level of degrees Brix) or ingredients (e.g. levels of citric acid, glutamic acid). Preferred ranges will often be described in the following format: preferably at least x1, more preferably at least x2, even more preferably x3, preferably at most y1, more preferably at most y2, even more preferably at most y3, whereby x1<x2<x3<y3<y2<y1. This format is meant to include the preferred ranges x1 to y1, more preferably x2 to y2 and even more preferably x3 to y3 whereby the endpoints are included and also all sub ranges subsumed therein (e.g. x1 to y3 and x3 to y1). The same applies when ranges are described in the format "more than x1" or "less than y1" except that the endpoints are not included. Vice versa, when preferred ranges are described as x1 to y1, more preferably x2 to y2 and even more preferably x3 to y3, the endpoints are meant to be included and also all sub ranges subsumed therein (e.g. x1 to y3 and x3 to y1). In addition, all open ended ranges are meant to be included: preferably at least x1, more preferably at least x2, even more preferably x3, preferably at most y1, more preferably at most y2, even more preferably at most y3.

The invention is further illustrated by the following non-limiting examples. It will be clear to the skilled person how to carry out the invention by using equivalent means without departing from the invention.

### Example 1

Tomatoes were washed and pressed through square holes resulting in an aqueous liquid comprising soluble tomato solids and pulp, a (wet) solid mass containing mainly insoluble tomato components called the fibers as well as seeds and skin. Sieves were used to remove seeds and skin and further separation of the fibers is achieved by using a decanter or a centrifugal separator, such as a Westfalia CA-365-010 at a revolution speed of 4000 rpm and/or an Alfa Laval Centrifuge.

The tomato serum was concentrated to 12.5 degrees Brix strength using a Mitchell pilot plant tray dryer with a dry bulb temperature of 65 degrees C. Then the concentrated tomato serum was separated into a first portion and a second portion whereby the first portion is relatively lower in lycopene than the second portion using ultra filtration. The separation was carried out by ultra filtering the tomato serum through an Alfa-Laval polysulphone membrane with 100kDa molecular weight cut-off (GR40PP). The ultra filtration was performed in the plate and frame module of an M20 -Alfa-Laval filtration rig at 50 degrees Celsius with a trans-membrane pressure of 2-3 bars and a recirculation flow rate of 12L/min for the retentate stream. The permeate (first portion from separation step) was substantially free from lycopene.

The permeate obtained after the ultra filtration step was then further concentrated by means of the same Mitchell tray dryer with a dry bulb temperature 65 degrees C until reaching 40 degrees Brix strength. In the following step, the concentrated permeate was fractionated into a first primary fraction and a second primary fraction with a w/w ratio of tomato sugars to citric acid (S/C) higher than the first primary fraction. For this fractionation step, the concentrated permeate was used as a feed in ion exclusion chromatography by passing the feed over a XK 2.6/100 GE healthcare column. The ion exclusion resin used was the DIAION UBK530 in its K+ form. The length of bed filled with the resin was measured to 95cm and the diameter was 26mm. The temperature of the column was kept at 65 degrees C using a thermostat. The injection of feed and execution of the chromatography setup was achieved using an ÅKTA explorer 100 system from GE healthcare. A 5% Bed Volume (BV) of feed was injected followed by 2BV of elution, where demineralised water was the eluent. The cross flow velocity of the demineralised water was set to 0.95cm/min.

The first 0.3BV of each injection was discarded and the remaining elution of the chromatography was collected at different BV intervals in a refrigerated environment in order to remain suitable for human consumption. At least one first primary tomato fraction and at least one second primary tomato fraction were collected. The fractions were analyzed online for pH, electrical conductivity and refractive index signal. To obtain enough material, a number of injections were made sequentially and the respective fractions were pooled. The collected second primary fraction was then concentrated to 40 degrees Brix using the Mitchell tray dryer as described above.

The concentrated second primary fraction was then used as the feed for a second fractionation step using the same chromatography parameters as for the first fractionation step. The primary fraction was fractionated into at least one first secondary tomato fraction and at least one second secondary tomato fraction.

Sugars and citric acid were determined by HPLC, using Aminex HPX-87H column, 300 x 7.8mm and 5 mM sulphuric acid, pH=2 as eluent, flow rate 0.6 ml/min, at 65 degrees C. Detection was carried out using UV (220 nm) and refractive index detector. This method may slightly overestimate the amount of glucose and fructose as the trace amount of sucrose in the tomato fraction is inverted to glucose and fructose. For the present purpose this is ignored and the values of glucose and fructose have not been corrected. The three amino acids were determined by AccQ_Tag HPLC method of Waters Cooperation USA. GABA was found to elute together with Proline. Therefore, the area of that peak was assumed to represent the combined amount of GABA and proline and the content was calculated using the molecular weight of proline.

A first primary fraction A according to the invention was collected between 0.36 and 0.55 bed volume(BV).

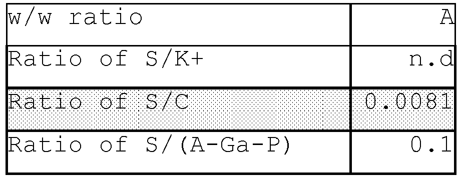

A second primary fraction B was collected between 0.55 and 0.90 bed volume as shown below. This primary tomato fraction showed an excellent sugar to citric acid ratio.

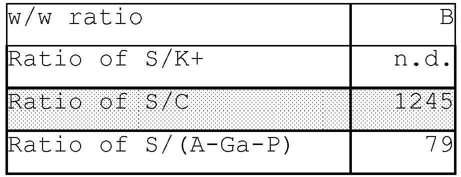

### Example 2

Another second primary tomato fraction C was prepared as described in Example 1.

Second primary fraction C collected at similar bed volumes and had a w/w ratio of tomato sugars to Aspartic+GABA+proline of 63.

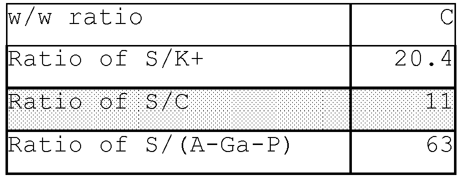

### Example 3

The second primary fraction C of Example 2 was used as feed for a second fractionation step using the same chromatography conditions as described for example 1 to prepare a secondary fraction D. Secondary fraction D was collected from between 0.63 and 0.80 bed volume onwards.

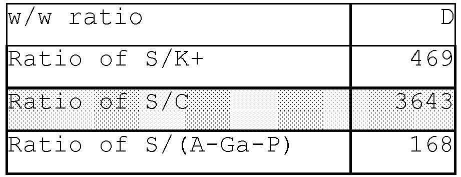

### Example 4

Two other secondary fractions E and F were prepared as described in Example 3. Fraction E was collected between 0.63 and 0.80 bed volume while fraction F was collected between 0.61 and 0.80 bed volume.

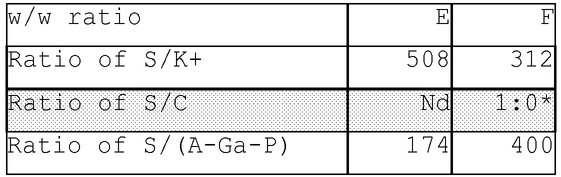

* citric acid was not measurable

### Example 5

Example 1 was repeated except that the two primary fractions collected were collected at different BV compared to example 1 such that the second primary fraction G had such low levels of citric acid that the w/w ratio of tomato sugars to citric acid was 4.3*10⁸ while the w/w ratio of tomato sugars to the combined amount of Aspartic acid, GABA and proline was 321. The second primary fraction G was collected between 0.68 and 0.80 bed volume.

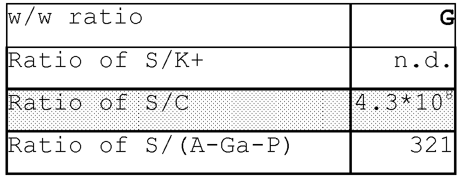

### Example 6

Tomato serum was prepared and concentrated to 12.5 degrees Brix according to example 1.

2 Liters of the 12.5 degrees Brix tomato serum was used as feed for a fractionation step using electrodialysis. The feed was placed in the diluate feeding vessel of the electodialysis equipment, with a conductivity of 8.5mS/cm. 1.5 liters of a 5g/L NaCl solution with a conductivity of ca 9.5mS/cm were placed in the concentrate vessel. The recirculation flow of both diluate and concentrate was set to 180L/hr. A Eurodia ED lab scale rig with a EUR2B-10 electodialysis stack was used. The cation exchange membrane used was the NEOSEPTA CMX-5B and the anion exchange membrane used was a NEOSEPTA AXE 01, all manufactured by Tokuyama Corp. A 14volt voltage was applied resulting in gradual reduction of the conductivity from the diluate and increased conductivity of the concentrate. Samples were taken out at different times and w/w ratio of sugars to citric acid and w/w ratio of sugars to the combined amount of aspartic acid, GABA and proline.

### Example 6a electrodialysis performed for 20 minutes

| w/w ratio | First primary tomato fraction (Diluate) | Second primary tomato fraction (concentrate) |
|---|---|---|
| Sugars/Citric acid | 6.2 | 28.3 |
| Sugars/ (A-Ga-P) | 17.1 | 35 |

### Example 6b of electodialysis performed for 12 minutes

| w/w ratio | First primary tomato fraction (Diluate) | Second primary tomato fraction (concentrate) |
|---|---|---|
| Sugars/Citric acid | 6.2 | 18.3 |
| Sugars/ (A-Ga-P) | 16.6 | 20.9 |

### Example 6c performed for 22 minutes

| w/w ratio | First primary tomato fraction (Diluate) | Second primary tomato fraction (concentrate) |
|---|---|---|
| Sugars/Citric acid | 6.2 | 35.6 |
| Sugars/ (A-Ga-P) | 16.6 | 31.3 |

### Example 7 Tomato Ketchup sweetened with a tomato fraction according to the invention

| **Ingredient** | **Wt%** |
|---|---|
| | |
| Tomato Paste | 24.2% |
| Vinegar | 8.6% |
| Flavour | 0.1% |
| Thickeners | 0.2% |
| Preservative | 0.1% |
| Citric acid anhydrous | 0.2% |
| Salt | 2.5% |
| Tomato Fraction | 22.1% |
| Water | 42.0% |
| **TOTAL** | **100.0%** |

### Example 8 Tomato sauce for pasta sweetened with a tomato fraction according to the invention

| **Ingredient** | **Wt%** |
|---|---|
| Chopped Onion | 0,5% |
| Tomato paste | 51,5% |
| Olive Oil | 1,7% |
| Refined salt | 2,0% |
| Tomato Fraction | 1, 6% |
| Water | 42,4% |
| Spices | 0,2% |
| Cheese | 0,1% |
| **Total** | **100,0%** |

## Claims

1. A tomato fraction substantially free from lycopene, and comprises
- a w/w ratio of tomato sugars to citric acid (S/C) higher than 10:1, and
- a w/w ratio of tomato sugars to potassium (S/K+) higher than 15:1
whereby tomato sugars is the combined amount of glucose and fructose.

2. A tomato fraction according to claim 1 comprising a w/w ratio of tomato sugars to the combined amount of aspartic acid, gamma amino butyric acid and proline (S/(A-Ga-P) higher than 20:1, preferably higher than 100:1.

3. A tomato fraction according to any one of the preceding claims comprising a w/w ratio of tomato sugars to citric acid (S/C) higher than 15:1.

4. A method of producing a tomato fraction comprising the steps of
a) providing a tomato serum, preferably substantially free from sucrose;
b) separating the serum into two or more portions: at least one first portion and at least one second portion whereby the at least one first portion is lower in lycopene than the at least one second portion;
c) concentrating the at least one first portion low in lycopene, preferably to a Brix value of at least 10, degrees Brix;
d) fractionating the at least one first portion low in lycopene into at least one first primary fraction and at least one second primary fraction whereby the w/w ratio of tomato sugars to citric acid (S/C) of the at least one first primary fraction is lower than the at least one second primary fraction, and the at least one second primary fraction having a w/w ratio of tomato sugars to citric acid (S/C) higher than 10;
e) optionally, subjecting a primary fraction to a second fractionation step to prepare at least one first secondary fraction having a w/w ratio of tomato sugars to the combined amount of aspartic acid, GABA and proline (S/A-Ga-P) of at most 20:1, and at least one second secondary fraction having a w/w ratio of (S/A-Ga-P) higher than 20:1;
f) optionally, combining the at least one second primary fraction and the at least one second secondary fraction to form a tomato fraction having a w/w ratio of tomato sugars to citric acid of higher than 10:1.

5. A method according to claim 4 whereby the at least one first portion comprises of more than 5 g/L of potassium, by weight of said first portion.

6. A method according to any one of claims 4 or 5 whereby the step b) of separating the tomato serum is carried out by ultra filtration and the fractionation step d is carried out by ion exclusion chromatography.

7. A method according to any one of claims 4 to 6 whereby the ion exclusion chromatography is preferably carried out at a temperature of at least 40 degrees C.

8. A tomato fraction according to any one of claims 1-3, obtainable by the method according to any one of claims 4 to 7.

9. A tomato fraction according to any one of claims 1, 2, 3 or 8 comprising less than 3 ppm lycopene based on wet weight of the tomato fraction.

10. A tomato fraction according to any one of claims 1, 2, 3, 8 or 9 comprising on solids base more than 70wt% of tomato sugars.

11. A method of sweetening a food product comprising the step of mixing the food product to be sweetened with a tomato fraction according to any one of claims 1, 2, 3, 8, 9 or 10.

12. A method of sweetening a food product according to claim 11 whereby the food product to be sweetened is mixed with at least 1 wt% of said tomato fraction based on the dry weight of the tomato fraction and the food product.

13. A method of sweetening a food product according to claim 12 whereby the food product is selected from the group comprising tomato ketchup, sauces, soups, dressings, meals, side dishes, cooking aids, beverages, ice cream and concentrates of fruit and vegetable(s).

## Patentansprüche

1. Tomatenfraktion, die im Wesentlichen frei von Lycopin ist, und umfasst
- ein Gew./Gew.-Verhältnis von Tomatenzuckern zu Zitronensäure (S/C) von mehr als 10:1 und
- ein Gew./Gew.-Verhältnis von Tomatenzuckern zu Kalium (S/K+) von mehr als 15:1,
wobei die Tomatenzucker die kombinierte Menge von Glucose und Fructose darstellen.

2. Tomatenfraktion nach Anspruch 1, umfassend ein Gew./Gew.-Verhältnis von Tomatenzuckern zu der kombinierten Menge von Asparaginsäure, Gamma-Aminobuttersäure und Prolin (S/(A-Ga-P) von mehr als 20:1, vorzugsweise von mehr als 100:1.

3. Tomatenfraktion nach irgendeinem der vorhergehenden Ansprüche, umfassend ein Gew./Gew.-Verhältnis von Tomatenzuckern zu Zitronensäure (S/C) von mehr als 15:1.

4. Verfahren zur Herstellung einer Tomatenfraktion, umfassend die Schritte
a) Bereitstellen eines Tomatenserums, vorzugsweise im Wesentlichen frei von Sucrose,
b) Auftrennen des Serums in zwei oder mehrere Portionen: mindestens eine erste Portion und mindestens eine zweite Portion, wobei die mindestens eine erste Portion im Lycopin niedriger als die mindestens eine zweite Portion liegt;
c) Konzentrieren der mindestens einen ersten Portion mit niedrigem Gehalt an Lycopin, vorzugsweise bis auf einen Brix-Wert von mindestens 10 Grad Brix,
d) Fraktionieren der mindestens einen ersten Portion mit niedrigem Gehalt an Lycopin in mindestens eine erste Primärfraktion und mindestens eine zweite Primärfraktion, wobei das Gew./Gew.-Verhältnis von Tomatenzuckern zu Zitronensäure (S/C) der mindestens einen ersten Primärfraktion niedriger als das der mindestens einen zweiten Primärfraktion liegt und die mindestens eine zweite Primärfraktion ein Gew./Gew.-Verhältnis von Tomatenzuckern zu Zitronensäure (S/C) von mehr als 10 aufweist,
e) gegebenenfalls Unterwerfen einer Primärfraktion einem zweiten Fraktionierungsschritt, um mindestens eine erste Sekundärfraktion mit einem Gew.-/Gew.-Verhältnis von Tomatenzuckern zu der kombinierten Menge von Asparaginsäure, GABA und Prolin (S/A-Ga-P) von höchstens 20:1 und mindestens eine zweite Sekundärfraktion mit einem Gew./Gew.-Verhältnis von (S/A-Ga-P) von mehr als 20:1 herzustellen,
f) gegebenenfalls Kombinieren der mindestens einen zweiten Primärfraktion und der mindestens einen zweiten Sekundärfraktion, um eine Tomatenfraktion mit einem Gew./Gew.-Verhältnis von Tomatenzuckern zu Zitronensäure von mehr als 10:1 zu bilden.

5. Verfahren nach Anspruch 4, wobei die mindestens eine erste Portion mehr als 5 g/l Kalium, bezogen auf das Gewicht der ersten Portion, umfasst.

6. Verfahren nach irgendeinem der Ansprüche 4 oder 5, wobei der Schritt b) des Auftrennens des Tomatenserums mit Ultrafiltration und der Fraktionierungsschritt d) mit Ionenausschlusschromatographie durchgeführt wird.

7. Verfahren nach irgendeinem der Ansprüche 4 bis 6, wobei die Ionenausschlusschromatographie vorzugsweise bei einer Temperatur von mindestens 40 Grad C durchgeführt wird.

8. Tomatenfraktion nach irgendeinem der Ansprüche 1-3, erhältlich durch das Verfahren nach irgendeinem der Ansprüche 4 bis 7.

9. Tomatenfraktion nach irgendeinem der Ansprüche 1, 2, 3 oder 8, umfassend weniger als 3 ppm Lycopin, bezogen auf das Nassgewicht der Tomatenfraktion.

10. Tomatenfraktion nach irgendeinem der Ansprüche 1, 2, 3, 8 oder 9, umfassend auf Feststoffbasis mehr als 70 Gew.-% Tomatenzucker.

11. Verfahren zum Süßen eines Nahrungsmittelprodukts, umfassend den Schritt des Mischens des zu süßenden Nahrungsmittelprodukts mit einer Tomatenfraktion nach irgendeinem der Ansprüche 1, 2, 3, 8, 9 oder 10.

12. Verfahren zum Süßen eines Nahrungsmittelprodukts nach Anspruch 11, wobei das zu süßende Nahrungsmittelprodukt mit mindestens 1 Gew.-% der Tomatenfraktion, bezogen auf das Trockengewicht der Tomatenfraktion und des Nahrungsmittelprodukts, gemischt wird.

13. Verfahren zum Süßen eines Nahrungsmittelprodukts nach Anspruch 12, wobei das Nahrungsmittelprodukt unter der Gruppe ausgewählt ist, die Tomatenketchup, Soßen, Suppen, Dressings, Mahlzeiten, Beilagen, Kochhilfen, Getränke, Eiscreme und Konzentrate von Früchten und Gemüse umfasst.

## Revendications

1. Fraction de tomate pratiquement exempte de lycopène, et qui comprend
- un rapport masse/masse de sucres de tomate à acide citrique (S/C) supérieur à 10:1, et
- un rapport masse/masse de sucres de tomate à potassium (S/K+) supérieur à 15:1
les sucres de tomate sont par-là la quantité combinée de glucose et de fructose.

2. Fraction de tomate selon la revendication 1 comprenant un rapport masse/masse de sucres de tomates à la quantité combinée d'acide aspartique, d'acide gamma-aminobutyrique et de proline (S/(A-Ga-P) supérieur à 20:1, de préférence supérieur à 100:1.

3. Fraction de tomate selon l'une quelconque des revendications précédentes comprenant un rapport masse/masse de sucres de tomate à acide citrique (S/C) supérieur à 15:1.

4. Procédé de production d'une fraction de tomate comprenant les étapes de
a) fourniture d'un sérum de tomate, de préférence pratiquement exempt de saccharose ;
b) séparation du sérum en deux ou plusieurs portions : au moins une première portion et au moins une seconde portion la au moins une première portion est par-là inférieure en lycopène à la au moins une seconde portion ;
c) concentration de la au moins une première portion faible en lycopène, de préférence à une valeur Brix d'au moins 10, degrés Brix ;
d) fractionnement de la au moins une première portion faible en lycopène en au moins une première fraction primaire et au moins une seconde fraction primaire, le rapport masse/masse de sucres de tomate à acide citrique (S/C) de la au moins une première fraction primaire est par là inférieur à la au moins une seconde fraction primaire, et la au moins une seconde fraction primaire présentant un rapport masse/masse de sucres de tomate à acide citrique (S/C) supérieur à 10 ;
e) éventuellement, soumission d'une fraction primaire à une seconde étape de fractionnement pour préparer au moins une première fraction secondaire ayant un rapport masse/masse de sucres de tomate à la quantité combinée d'acide aspartique, de GABA et de proline (S/A-Ga-P) d'au plus 20:1, et au moins une seconde fraction secondaire présentant un rapport masse /masse de (S/A-Ga-P) supérieur à 20:1 ;
f) éventuellement, combinaison de la au moins une seconde fraction primaire et de la au moins une seconde fraction secondaire pour former une fraction de tomate ayant un rapport masse /masse de sucres de tomate à acide citrique supérieur à 10:1.

5. Procédé selon la revendication 4, la au moins une première portion comprend par là plus de 5 g/L de potassium, en masse de ladite première portion.

6. Procédé selon l'une quelconque des revendications 4 ou 5, l'étape b) de séparation du sérum de tomate est par là réalisée par ultrafiltration et l'étape de fractionnement d) est réalisée par chromatographie par exclusion d'ions.

7. Procédé selon l'une quelconque des revendications 4 à 6, la chromatographie par exclusion d'ions est par là de préférence réalisée à une température d'au moins 40 degrés C.

8. Fraction de tomate selon l'une quelconque des revendications 1-3, pouvant être obtenue par le procédé selon l'une quelconque des revendications 4 à 7.

9. Fraction de tomate selon l'une quelconque des revendications 1, 2, 3 ou 8 comprenant moins de 3 ppm de lycopène sur la base de masse humide de la fraction de tomate.

10. Fraction de tomate selon l'une quelconque des revendications 1, 2, 3, 8 ou 9 comprenant sur une base de matières solides plus de 70 % en masse de sucres de tomate.

11. Procédé d'édulcoration d'un produit alimentaire comprenant l'étape de mélange du produit alimentaire à édulcorer avec une fraction de tomate selon l'une quelconque des revendications 1, 2, 3, 8, 9 ou 10.

12. Procédé d'édulcoration d'un produit alimentaire selon la revendication 11, le produit alimentaire à édulcorer est par là mélangé avec au moins 1 % en masse de ladite fraction de tomate sur la base de la masse sèche de la fraction de tomate et du produit alimentaire.

13. Procédé d'édulcoration d'un produit alimentaire selon la revendication 12, le produit alimentaire est par là choisi dans le groupe constitué de ketchup de tomate, sauces, soupes, assaisonnements, repas, accompagnements, aides à la cuisson, boissons, crème glacée et concentrés de fruit et de légume(s).
